# DEMANDE DE BREVET EUROPEEN

(11) **EP 0 774 291 A1**
(43) Date de publication de la demande: **21.05.1997**
(21) Numéro de dépôt: 95440076.8
(22) Date de dépôt: 15.11.1995
(51) Int. Cl.: B01D 53/84, B01D 53/34

(54) **Procédé et dispositif de désodorisation des effluents gazeux malodorants, notamment de l'air vicié**

(71) Demandeur: SERIAPAC SàRL, 68500 Jungholtz (FR)
(72) Inventeur: Ermel, Georges, 68700 Wattwiller (FR); Fattinger, Volker, 4144 Arlesheim (CH)
(74) Mandataire: Dénoyez, Hubert

(57) **Abrégé**

Procédé et dispositif de désodorisation des effluents gazeux malodorants, notamment de l'air vicié, dans lequel le gaz à traiter traverse au moins un filtre (4, 5, 6) renfermant une couche de lavage (40, 50, 60) formée d'un corps de remplissage régulièrement arrosé par une solution d'une substance chimique appropriée.

La couche de lavage (40, 50, 60) est constituée pour une part importante d'un matériau poreux capable d'absorber plus de 5% de son poids d'eau sous forme non égouttable, et elle est arrosée à intervalles de temps très courts et très espacés avec de l'eau sous pression additionnée de ladite substance chimique, la durée de l'arrosage étant inférieure au 1/20^{ème} du temps de fonctionnement.

## Description

La présente invention a pour objet un procédé de désodorisation des effluents gazeux malodorants, et le dispositif pour sa mise en oeuvre.

On sait que des gaz malodorants se dégagent notamment lors du traitement des boues dans les stations d'épuration des eaux usées, au cours de la fabrication du compost ou du traitement des déchets animaux, ainsi que dans certaines fabrications industrielles. Il s'agit le plus souvent d'air évacué, mais il peut aussi s'agir de fumées ou d'autres effluents gazeux chargés de produits malodorants.

La proportion de substances malodorantes dans ces effluents est le plus souvent extrêmement réduite, de l'ordre de quelques milligrammes par m³ de gaz, et dans de nombreux cas elle peut n'être que de quelques fractions de milligrammes par m³, causant néanmoins des nuisances importantes.

Il est connu d'utiliser des laveurs de gaz pour épurer ces effluents gazeux, en mettant en oeuvre des filtres arrosés régulièrement par des solutions de lavage renfermant des substances chimiques appropriées. Ainsi les produits malodorants du type ammoniac ou amines sont éliminés à l'aide d'une solution acide diluée, le sulfure d'hydrogène et les mercaptans à l'aide d'une solution alcaline renfermant de l'eau de javel ou un autre oxydant.

Les filtres des laveurs de gaz utilisés à ce jour renferment généralement une couche d'un corps de remplissage le plus souvent constitué de porcelaine, de céramique, de verre ou d'une matière plastique, dont la surface est arrosée régulièrement avec la solution de lavage.

Le gaz à traiter pouvant renfermer plus d'une substance malodorante, par exemple à la fois des amines et de l'hydrogène sulfuré, on met le plus souvent en oeuvre plusieurs filtres que le gaz traverse successivement et qui sont arrosés chacun par une substance chimique différente.

La concentration des substances chimiques dans les solutions de lavage est généralement très faible, se situant aux environs de quelques grammes par litre d'acide chlorhydrique ou de soude, même pour des valeurs de pH extrêmes, par exemple pH 2 (fortement acide) ou pH 12 (fortement alcalin).

Il est également connu d'épurer l'air vicié à l'aide de biofiltres, qui renferment des microorganismes. La couche filtrante d'un tel biofiltre absorbe les produits malodorants, qui sont oxydés par les microorganismes. Ces biofiltres doivent néanmoins être régulièrement arrosés en vue de maintenir leur taux d'humidité, tandis que leur pH doit être maintenu à une valeur convenable par addition de substances chimiques telles que des phosphates, de l'acide acétique ou de l'ammoniaque à la solution d'arrosage.

La mise en oeuvre des laveurs de gaz s'effectue le plus souvent en recourant à des pompes puissantes pour réaliser l'arrosage des filtres, ce qui entraîne des dépenses importantes en investissements et en fonctionnement, en raison notamment de la consommation d'énergie constante de ces pompes.

Les installations de lavage de gaz utilisées à ce jour présentent d'autre part l'inconvénient de nécessiter des arrosages fréquents des différents filtres mis en oeuvre, notamment en raison du fait que la plus grande partie de la solution de lavage utilisée pour humecter la couche de corps de remplissage ruisselle ou s'écoule goutte à goutte vers le bas.

La présente invention a pour but de remédier à ces divers inconvénients des dispositifs existants en proposant un procédé de désodorisation des effluents gazeux malodorants qui ne nécessite pas des arrosages fréquents, et dans lequel l'arrosage des filtres peut se faire sans mettre en oeuvre des pompes.

La présente invention a ainsi pour objet un procédé de désodorisation des effluents gazeux malodorants qui se caractérise essentiellement en ce qu'il met en oeuvre au moins un filtre renfermant une couche de lavage constituée pour une part importante d'un matériau poreux capable d'absorber au moins 5 % de son poids d'eau sous forme non égouttable, que l'on arrose à intervalles de temps très courts et très espacés avec de l'eau sous pression additionnée des substances chimiques appropriées.

La couche de corps poreux mise en oeuvre dans le procédé selon l'invention permet de n'effectuer que des arrosages de très courte durée largement espacés dans le temps, suffisants pour imprégner les corps poreux des substances chimiques choisies, lesquelles peuvent être mises en oeuvre sous forme de solution aqueuse ou de suspension aqueuse. Ainsi la durée d'arrosage peut être réduite à des valeurs inférieures à 1/20^{ème} du temps de fonctionnement, par exemple 1 minute par heure.

Afin d'augmenter les intervalles de temps d'arrosage, on utilisera avantageusement des substances poreuses susceptibles d'absorber plus de 40 % de leur poids d'eau sous forme non égouttable, qui permettent de réduire les fréquences d'arrosage à par exemple 2 minutes seulement toutes les 4 heures.

A titre d'exemple de telles substances poreuses on peut citer le verre expansé commercialisé sous la marque "PORAVER", de granulométrie 8-16 mm, qui absorbe plus de 45% de son poids d'eau sous forme non égouttable.

On peut également utiliser des grains de pierre ponce ou de béton-gaz, ce dernier matériau pouvant fixer plus de 60 % de son poids d'eau.

Les substances chimiques peuvent être ajoutées à l'eau à l'aide de pompes de dosage, mais on peut faire l'économie de telles pompes en effectuant l'arrosage à l'aide d'eau sous pression, notamment l'eau de distribution locale de la commune, dont la pression dans les conduites de distribution est généralement comprise entre 4 et 6 bars. On peut alors mettre en oeuvre un injecteur dans lequel l'eau est additionnée des substances chimiques appropriées, prélevées par l'injecteur dans un réservoir.

Dans un mode de mise en oeuvre avantageux du procédé selon l'invention la solution de la ou des substances chimiques choisies est pompée de manière continue à l'aide d'une petite pompe doseuse qui l'envoie dans un récipient de transit qui est traversé au moment des arrosages par de l'eau et/ou de l'air sous pression qui l'entraînent vers les rampes d'arrosages.

Ce mode de réalisation peut être mis en oeuvre en utilisant pour l'arrosage des buses bi-fluides dans lesquelles on injecte périodiquement de l'air comprimé. Les buses aspirent alors la solution contenue dans le réservoir correspondant et la projettent sur la couche de corps poreux.

Cette aspiration de la solution de lavage par l'air comprimé peut être associée ou non à l'envoi d'eau sous pression à travers le récipient de transit.

On peut d'autre part réduire de manière appréciable la quantité de substances chimiques nécessaires à l'épuration des gaz en faisant d'abord passer le gaz à traiter, en vue d'une pré-épuration, sur un biofiltre que l'on arrose de la même manière que les couches de substances chimiques afin de maintenir son taux d'humidité et de régler son pH tout en lui apportant éventuellement les sels nutritifs nécessaires aux microorganismes.

Les produits de réaction provenant de la fixation chimique des substances malodorantes sont périodiquement éliminés de la couche de corps poreux par rinçage à l'eau de cette dernière. La solution de rinçage recueillie peut alors être avantageusement utilisée pour assurer un prétraitement des gaz à traiter, avant leur passage à travers le premier filtre, en vue d'éviter des pertes de substances chimiques non utilisées.

Le procédé selon l'invention présente l'avantage considérable, par rapport aux procédés existants, de ne mettre en oeuvre que des quantités d'eau mesurées pour réaliser des arrosages de courte durée très espacés dans le temps, en évitant en outre le recours à des pompes.

Il en résulte une économie importante de fonctionnement, tant au plan de la consommation en eau qu'à celui de la consommation en énergie électrique.

La présente invention a également pour objet un dispositif pour la mise en oeuvre du procédé selon l'invention, ce dispositif se caractérisant essentiellement en ce qu'il comprend en combinaison :
a) une arrivée d'eau sous pression et/ou une arrivée d'air sous pression ;
b) au moins une couche de lavage renfermant un corps poreux au-dessus duquel se trouve disposée une rampe d'arrosage, et à proximité de laquelle débouche la conduite d'amenée du gaz à traiter ;
c) au moins un réservoir renfermant une solution aqueuse d'au moins une substance chimique approprié ;
d) au moins un récipient de transit dans lequel une petite pompe doseuse fonctionnant en continu envoie la solution de substance chimique et qui est traversé au moment des arrosages par l'eau sous pression et/ou l'air sous pression ;
e) au moins une horloge commandant à intervalles de temps prédéterminés l'ouverture et la fermeture d'au moins une électrovanne disposée entre l'arrivée d'eau et la rampe d'arrosage.

Le dispositif selon l'invention peut comprendre plusieurs couches de lavage successives destinées chacune à être imprégnée d'une solution chimique différente, en fonction des produits à éliminer de l'air à épurer. Dans ce cas les filtres successifs peuvent être avantageusement disposés les uns au-dessus des autres de manière à constituer un tour de lavage.

Le premier des filtres mis en oeuvre peut d'autre part consister en un biofiltre renfermant au moins un microorganisme. Dans ce cas la solution d'arrosage dudit biofiltre pourra renfermer une solution de sels nutritifs appropriés additionnés le cas échéant de substances régulatrices du pH, par exemple de l'acide acétique, des phosphates ou de l'ammoniaque.

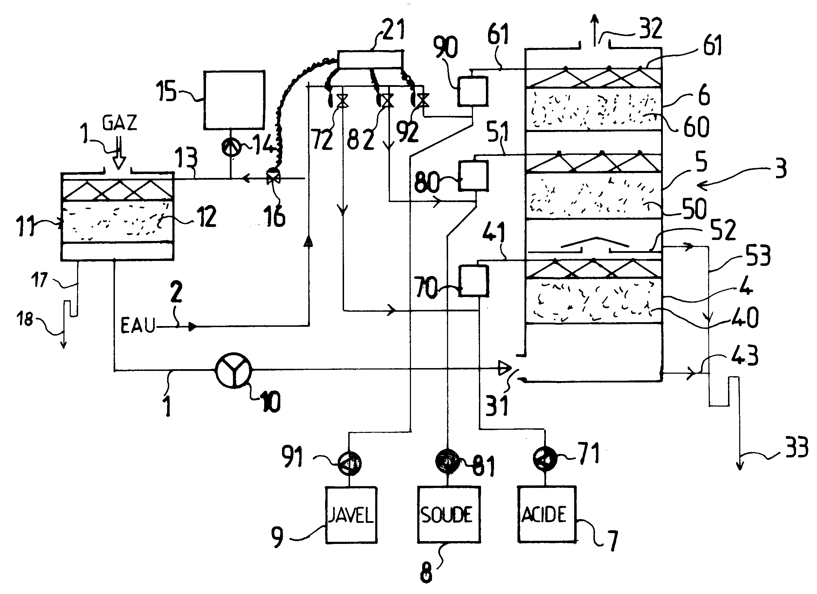

Les caractéristiques et les avantages de la présente invention ressortiront plus clairement de la description qui suit et qui se rapporte au dessin annexé, étant entendu que cette description ne présente aucun caractère limitatif vis à vis de l'invention.

La figure unique du dessin annexé représente schématiquement un mode de réalisation du dispositif selon l'invention.

Si on se réfère à cette figure, on voit qu'un dispositif selon l'invention comprend une conduite 1 d'arrivée du gaz à épurer, qui est aspiré par un ventilateur 10 à travers un biofiltre 11 et envoyé dans une tour 3 de lavage munie à sa base d'une entrée 31 et à son extrémité supérieure d'une sortie 32.

Le biofiltre 11 renferme une couche 12 de biomasse constituée pour partie de verre expansé PORAVER, surmontée d'une rampe d'arrosage 13 raccordée, par l'intermédiaire d'une pompe doseuse 14, à un réservoir 15 renfermant la solution d'arrosage.

La tour 3 comprend trois filtres superposés 4, 5 et 6 renfermant chacun une couche 40, 50, 60 de verre expansé PORAVER.

Les filtres 4, 5 et 6 sont surmontés chacun d'une rampe d'arrosage, respectivement 41, 51 et 61, munie de buses 20 convenablement disposées et orientées de manière à arroser toute la surface de chaque couche 40, 50, 60.

La rampe d'arrosage 41 du filtre inférieur 4 est raccordée à un récipient de transit 70 rempli de façon continue par une pompe doseuse 71 reliée à un réservoir 7 contenant une solution acide.

La rampe d'arrosage 51 du filtre médian 5 est raccordée à un récipient de transit 80 rempli de façon continue par une pompe doseuse 81 reliée à un réservoir 8 de soude.

La rampe d'arrosage 61 du filtre supérieur 6 est raccordée à un récipient de transit 90 rempli de façon continue par une pompe doseuse 91 reliée à un réservoir 9 contenant de l'eau de Javel.

Une conduite 2 d'arrivée d'eau sous pression, provenant du circuit de distribution locale, est raccordée à la rampe d'arrosage 13 du biofiltre 11 à travers une électrovanne 16.

La conduite 2 d'arrivée d'eau est d'autre part raccordée au récipient 70 à travers une électrovanne 72, au récipient 80 à travers une électrovanne 82 et au récipient 90 à travers une électrovanne 92.

Toutes les électrovannes, 16, 72, 82 et 92 sont reliées à des horloges 21 qui sont réglées de manière à commander leur ouverture selon une périodicité et pendant une durée prédéterminées, de manière à arroser les différentes couches de corps poreux pendant un court laps de temps, à savoir 1 minute par heure.

Les eaux de rinçage des deux étages supérieurs de la tour de lavage 3, à savoir l'étage 6 arrosé par l'eau de Javel et l'étage 5 arrosé par la solution de soude, sont arrêtées par un plateau 52 disposé en-dessous du filtre 5 et évacués par une conduite 53 vers un tout-à-l'égout 33, dans lequel s'écoulent également les eaux de rinçage provenant du filtre inférieur 4, qui sont évacuées par une conduite 43.

De la même manière les eaux de rinçage du biofiltre 11 s'écoulent à travers une conduite 17 vers un tout-à-l'égout 18.

Un tel dispositif permet de réaliser d'importantes économies en eau et en substances chimiques, mais aussi en énergie électrique, les seules pompes mises en oeuvre étant des petites pompes doseuses fonctionnant en continu.

A titre indicatif, une telle installation peut ne consommer, pour le traitement de 10 000 m³ de gaz par heure, que les quantités ci-après :

| | |
|---|---|
| Eau | 80 litres/h |
| Soude | 5 g/h |
| Eau de Javel | 10 g/h |
| Acide chlorhydrique | 3 g/h |
| Energie électrique | 10 kwh |

## Revendications

1. Procédé de désodorisation des effluents gazeux malodorants, notamment de l'air vicié, dans lequel le gaz à traiter traverse au moins un filtre (4) renfermant une couche de lavage (40) formée d'un corps de remplissage régulièrement arrosé par une solution d'une substance chimique appropriée, caractérisé en ce que ladite couche de lavage (40) est constituée pour une part importante d'un matériau poreux capable d'absorber plus de 5% de son poids d'eau sous forme non égouttable, et en ce que ladite couche est arrosée à intervalles de temps très courts et très espacés avec de l'eau sous pression additionnée de ladite substance chimique, la durée de l'arrosage étant inférieure au 1/20^{ème} du temps de fonctionnement

2. Procédé selon la revendication 1, caractérisé en ce que le matériau poreux mis en oeuvre est du verre expansé, du béton-gaz ou de la pierre ponce.

3. Procédé selon la revendication 1 ou la revendication 2, caractérisé en ce que le gaz traverse plusieurs filtres (4, 5, 6) renfermant chacun un matériau poreux, lesdits filtres (4, 5, 6) étant imprégnés de solutions de substances chimiques différentes.

4. Procédé selon l'une des revendications précédentes, caractérisé en ce qu'au moins un des filtres mis en oeuvre est un biofiltre (11).

5. Procédé selon la revendication 4, caractérisé en ce que le biofiltre (11) est arrosé par de l'eau éventuellement additionnée de sels nutritifs et/ou de substances régulatrices de pH.

6. Dispositif pour la désodorisation des effluents gazeux malodorants, notamment de l'air vicié, comprenant au moins un filtre (4, 5, 6) et au moins un réservoir (7, 8, 9) renfermant une solution acqueuse d'une substance chimique appropriée, caractérisé en ce que le filtre (4, 5, 6) renferme une couche (40, 50, 60) d'un matériau poreux capable d'absorber plus de 5 % de son poids d'eau sous forme non égouttable, et en ce que ledit dispositif comprend en outre :
a) une arrivée (9) d'eau sous pression ;
b) au moins une rampe d'arrosage (41, 51, 61) disposée au-dessus de chaque filtre (4, 5, 6) ;
c) au moins une horloge (21) commandant l'ouverture et la fermeture intermittentes d'électrovannes (72, 82, 92) de manière à provoquer l'arrosage périodique de chaque filtre (4, 5, 6) par de l'eau additionnée d'une substance chimique.

7. Dispositif selon la revendication 6, caractérisé en ce qu'il comprend plusieurs filtres (4, 5, 6) disposés l'un au-dessus de l'autre dans une tour de lavage (3).

8. Dispositif selon la revendication 6 ou la revendication 7, caractérisé en ce que le gaz à épurer est amené par une conduite (1) à l'aide d'un ventilateur (10) qui l'introduit à la base du filtre (4, 5, 6) ou de la tour de lavage (3), d'où il ressort par une sortie (32) disposée à l'extrémité supérieure dudit filtre (4, 5, 6) ou de ladite tour de lavage (3).

9. Dispositif selon l'une des revendications 6 à 8, caractérisé en ce qu'il comporte un biofiltre (11).

10. Dispositif selon la revendication 9, caractérisé en ce que le gaz à épurer traverse le biofiltre (11) de haut en bas sous l'effet d'aspiration d'un ventilateur (10) qui est disposé à sa sortie et qui l'envoie vers une tour de lavage (3) munie de plusieurs filtres superposés (4, 5, 6).

11. Dispositif selon la revendication 9 ou la revendication 10, caractérisé en ce que le biofiltre (11) est arrosé à intervalles réguliers par de l'eau éventuellement additionnée de sels nutritifs et/ou de substances régulatrices de pH.
